# EUROPÄISCHE PATENTSCHRIFT

(11) **EP 2 067 000 B1**
(45) Veröffentlichungstag und Bekanntmachung des Hinweises auf die Patenterteilung: **07.05.2014**
(21) Anmeldenummer: 07803043.4
(22) Anmeldetag: 30.08.2007
(51) Int. Cl.: G01B 11/14, G01B 15/00

(54) **VORRICHTUNG ZUR BESTIMMUNG DES ABSTANDS ZWISCHEN EINER LAUFSCHAUFEL UND EINER DIE LAUFSCHAUFEL UMGEBENDEN WANDUNG EINER STRÖMUNGSMASCHINE**
DEVICE FOR DETERMINING THE DISTANCE BETWEEN A ROTOR BLADE AND A WALL OF A TURBINE ENGINE, SURROUNDING SAID ROTOR BLADE
DISPOSITIF DE DÉTERMINATION DE LA DISTANCE ENTRE UNE AUBE MOBILE ET LA PAROI D'UNE TURBOMACHINE, ENTOURANT L'AUBE MOBILE

(30) Priorität: 29.09.2006 DE 102006046695
(43) Veröffentlichungstag der Anmeldung: 10.06.2009
(73) Patentinhaber: Siemens Aktiengesellschaft, 80333 München (DE)
(72) Erfinder: BOSSELMANN, Thomas, 91080 Marloffstein (DE); WILLSCH, Michael, 07745 Jena (DE)
(86) Internationale Anmeldenummer: PCT/EP2007/059034
(87) Internationale Veröffentlichungsnummer: WO 2008/040600

(56) Entgegenhaltungen:
- DE-A1- 19 705 769
- GB-A- 2 063 001

## Beschreibung

Die Erfindung betrifft eine Vorrichtung zur Abstandsbestimmung zwischen mindestens einer Laufschaufel und einer die mindestens eine Laufschaufel umgebenden Wandung von einer Gasturbine sowie eine Verwendung des Verfahrens. Eine entsprechende Vorrichtung zur Überwachung von Radial- und Axialspalt an Turbomaschinen und eine entsprechende Verwendung der Vorrichtung gehen aus der DE 197 05 769 A1 hervor.

Strömungsmaschinen, wie beispielsweise Dampf- oder Gasturbinen, werden als Wärme-Kraft-Maschinen in der Technik eingesetzt, um eine in einem Gasstrom gespeicherte Energie in eine mechanische Energie, insbesondere in eine Drehbewegung, zu überführen. Um den sicheren Betrieb von derartigen Strömungsmaschinen zu gewährleisten, ist man bestrebt, insbesondere während des Betriebes und somit während der Drehung eines in der Strömungsmaschine angeordneten Schaufelrades, die Laufschaufeln des Schaufelrades kontinuierlich zu überwachen. Dabei ist die exakte Einhaltung des Abstandes der Laufschaufelspitzen, d.h. der radial äußersten Ränder der Laufschaufeln, von der die Laufschaufeln umgebenden Wandung (Radialspalt) sehr wichtig. Es darf aus Sicherheitsgründen ein minimaler Radialspalt nicht unterschritten werden; jedoch führt ein zu großer Radialspalt zu einem unnötig geringen Wirkungsgrad. Neben dem Radialspalt ist besonders bei Schaufelrädern, bei denen die Schaufelreihen mit einem Deckband verkleidet sind, der axiale Abstand zu Wandungsteilen wichtig. Da sich diese Größen durch verschiedene dynamische Einflussfaktoren ändern, ist eine kontinuierliche Überwachung des Radialspaltes und des Axialspaltes während des Betriebes anzustreben. Die Größe des Radialspaltes kann z. B. mittels kapazitiver Sonden überwacht werden, die bis auf Berührung in die Nähe der Schaufelspitzen positioniert werden. Diese Sonden leiden jedoch unter begrenzter Genauigkeit, Ortsauflösung und Lebensdauer.

In der DE 197 05 769 A1 ist eine Vorrichtung zur Überwachung von Radial- und Axialspalt an einer Strömungsmaschine angegeben. Dabei wird ein Radarsystem verwendet, welches eine Sende- und Empfangseinheit umfasst, von der aus elektromagnetische Wellen mit einer festen Frequenz durch einen Hohlleiter auf ein Schaufelrad der Strömungsmaschine gerichtet werden. Der Hohlleiter wird dabei durch das Gehäuse, das das Schaufelrad umgibt, geführt und dort befestigt. Die Mündung des Hohlleiters ist sehr dicht über den Laufschaufelspitzen des Schaufelrades angeordnet, so dass aus dem Reflex der ausgesandten elektromagnetischen Wellen bestimmt werden kann, in welchem Abstand sich eine Laufschaufelspitze von dem Hohlwellenleiterende und damit von der die Laufschaufel umgebenden Wandung befindet. Die Bestimmung erfolgt mittels einer Auswertung der Phase der reflektierten elektromagnetischen Wellen. Die Abstandsbestimmung erfolgt, indem die Phasendifferenz zwischen ausgesandten und reflektierten Mikrowellen bestimmt wird.

Im Bereich des Schaufelrades innerhalb des Gehäuses können insbesondere in Gasturbinen im Betrieb extreme thermische Bedingungen vorherrschen. Bei Gastrubinen treten in deren Strömungskanal in der Regel Temperaturen von ca. 1200°C auf. Diese extreme Temperatur stellen besondere Anforderungen an die Beschaffenheit des Hohlwellenleiters, der einerseits temperaturbeständig ausgeführt sein muss und andererseits für die zu führenden elektromagnetischen Wellen ein geringes Dämpfungsvermögen aufweisen sollte. Hochtemperaturbeständige Materialien, wie beispielsweise Superlegierungen, zeichnen sich in der Regel dadurch aus, dass sie ein sehr hohes Dämpfungsvermögen für die zu führenden elektromagnetischen Wellen aufweisen, während Materialien mit niedrigem Dämpfungsvermögen, wie beispielsweise Kupfer, bei extremen Temperaturen in genannter Höhe unbeständig sind.

Der Erfindung liegt nun die Aufgabe zu Grunde, eine entsprechende Vorrichtung und Verwendung der Vorrichtung anzugeben, bei welcher der Hohlwellenleiter mit möglicht wenig Dämpfung elektromagnetischen Wellen führen kann und zugleich beständig gegenüber hohen Temperaturen ist.

Zur Lösung der Aufgabe wird eine Vorrichtung entsprechend den Merkmalen des unabhängigen Patentanspruchs 1 angegeben.

Dementsprechend soll die Vorrichtung zur Bestimmung des Abstands zwischen mindestens einer Laufschaufel und einer die mindestens eine Laufschaufel umgebenden Wandung einer Gasturbine, welche Vorrichtung folgende Teile umfasst, nämlich
- einen Hohlwellenleiter zum Führen elektromagnetischer Wellen und Aussenden von elektromagnetischen Wellen durch mindestens eine der Laufschaufel zugewandte Hohlwellenleiteröffnung in Richtung der Laufschaufel,
- mindestens ein mit dem Hohlwellenleiter verbundenes Mittel zum Einspeisen der elektromagnetischen Wellen in den Hohlwellenleiter,
- mindestens ein mit dem Hohlwellenleiter verbundenes Mittel zum Empfangen reflektierter Anteile der in den Hohlleiter einzuspeisenden elektromagnetischen Wellen,
und
- eine Auswerteeinheit zur Auswertung der zu empfangenen reflektierten Anteile der einzuspeisenden elektromagnetischen Wellen, umfassend Mittel zum Vergleich der Phase der einzuspeisenden elektromagnetischen Wellen mit der Phase der reflektierten Anteile der einzuspeisenden elektromagnetischen Wellen, wobei mittels der Auswerteeinheit für jede Frequenz ein Phasenvergleichswert ermittelbar ist und aus einem Vergleich der Phasenvergleichswerte der Abstands bestimmbar ist,
dahingehende ausgestaltet sein, dass
- der Hohlwellenleiter aus zumindest zwei Hohlwellenleitersegmenten ausgeführt ist, welche aus unterschiedlichen Materialien ausgestaltet sind, wobei die Temperaturbeständigkeit und das Dämpfungsvermögen für die elektromagnetischen Wellen der Materialien ausgehend von dem Segment, welches mit den Mitteln zum Einspeisen und Empfangen verbunden ist, in Richtung des die Hohlwellenleiteröffnung aufweisenden Segments zunehmen.

Der Erfindung liegt die Erkenntnis zugrunde, dass die Temperatur des Hohlwellenleiters ausgehend von der Hohlwellenleiteröffnung in Richtung der Mittel zum Einspeisen und Empfangen annimmt. Um eine möglichst optimale, effektive Führung der elektromagnetischen Wellen im Hohlwelleleiter zu gewährleisten, wird mit vorliegender Erfindung dieses Temperaturabnahmeprofil in erster Näherung auf den Hohlwellenleiter abgebildet, sodass erfindungsgemäß der Hohlwellenleiter entsprechend den Anforderungen an die Temperaturbeständigkeit und das Dämpfungsvermögen aus Segmenten unterschiedlicher Materialien mit jeweils anderem Dämpfungsvermögen und jeweils anderer Temperaturbeständigkeit zusammengesetzt ist.

Vorteilhafte Ausgestaltungen der erfindungsgemäßen Vorrichtung gehen aus den von Anspruch 1 abhängigen Ansprüchen hervor. Dabei kann die Ausführungsform nach Anspruch 1 mit den Merkmalen eines der zugeordneten Unteransprüche oder vorzugsweise auch denen aus mehreren Unteransprüchen kombiniert werden. Demgemäß kann die Vorrichtung nach der Erfindung zusätzlich noch folgende Merkmale aufweisen:
- So kann der Hohlwellenleiter aus drei Segmenten ausgeführt sein. Hiermit wird eine verbesserte Anpassung an das im Hohlwellenleiter in Betrieb der Gasturbine vorherrschende Temperaturprofil erreicht.
- Vorteilhaft können das Segment, welches mit den Mitteln zum Einspeisen und Empfangen verbunden ist, aus einem Metall mit einem geringen Dämpfungsvermögen, insbesondere einem Gruppe-11-Element oder Platin, und das die Hohlwellenleiteröffnung aufweisende Segment aus einer Superlegierung mit hoher Temperaturbeständigkeit ausgeführt sein.
   Kupfer, Silber und Gold, welche als Gruppe-11-Elemente in Frage kommen, weisen eine hervorragende elektrische Leitfähigkeit vor, die sich in einem sehr niedrigen Dämpfungsvermögen bei der Führung von elektromagnetischen Wellen widerspiegelt. Somit ist es möglich das Hohlwellenleitersegment, welches aus einem Gruppe-11-Element oder Platin ausgeführt ist oder zumindest mit einer Innenbeschichtung aus einem Gruppe-11-Element oder Platin versehen ist, soweit zu verlängern, dass die an dieses Segment angeschlossenen Mittel zum Einspeisen und Empfangen in sicherer Entfernung zur Wandung der Gasturbine angeordnet werden können.
   Eine Superlegierung bezeichnet Legierungen komplexer Zusammensetzung für Hochtemperaturanwendungen. Hierbei handelt es sich um Legierungen auf Eisen, Nickel oder Kobaldbasis mit Zusätzen der Elemente Kobald, Nickel, Eisen, Chrom, Molybdän, Wolfram, Rhenium, Ruthenium, Tantal, Niob, Aluminium, Titan, Mangan, Zirkonium, Kohlenstoff und/oder Bor. Mit einer Temperaturbeständigkeit von über 1200°C widersteht ein solches Hohlwellenleitersegment hohen Temperaturen, die im Strömungskanal und damit an der dem Strömungskanal zugewandten Seite der Wandung in Betrieb der Gasturbine vorherrschen.
- Vorteilhaft kann ein mittleres Segment aus einem Edelstahl ausgeführt sein. Damit ist gewährleistet dass ein solches Segment korrosionsbeständig ist. Die Temperaturbeständigkeit und das Dämpfungsvermögen liegen für Edelstahl zwischen Superlegierung und Gruppe-11-Element.
- Es kann günstig sein, wenn das Segment, welches mit den Mitteln zum Einspeisen und Empfangen verbunden ist, mit einer Flüssigkeit oder Luft kühlbar ausgeführt ist. Damit ist es möglich dieses Segment tiefer in die Wandung in Richtung Strömungskanal einzulassen. Temperaturschäden werden dabei durch die Kühlung vermieden. Als Kühlflüssigkeit kann beispielsweise Wasser verwendet werden.
- Es kann vorteilhafterweise der Hohlwellenleiter im Übergangsbereich zweier aufeinander folgender Segmente mit einer Beschichtung aus einem der beiden Segmentmaterialien versehen sein. Damit werden Reflexionen der elektromagnetischen Wellen an den Grenzflächen des Übergangsbereiches zwischen zwei Segmenten vermieden und die Führungseigenschaft des Hohlwellenleiters verbessert.
- Es kann von Vorteil sein, wenn das die Hohlwellenleiteröffnung aufweisende Segment als Horn ausgestaltet ist. Damit ist gewährleistet, dass die elektromagnetischen Wellen mit einer durch das Horn definierten Abstrahlcharakteristik den Hohlwellenleiter verlassen und die reflektierten Anteile der ausgesandten elektromagnetischen Wellen mit einer höheren Ausbeute wieder empfangen werden können, da die Empfangsausbeute durch den Horndurchmesser am Hohlwellenleiterende bestimmt wird. Das die Hohlwellenleiteröffnung aufweisende Segment schließt dabei bündig mit der dem Strömungskanal zugewandten Innenfläche der Wandung ab. Es kann aber auch in der Wandungsöffnung zurückgesetzt angeordnet werden, um das Segment nicht dem direkten Gasfluss in Strömungskanal auszusetzen.
- Günstigerweise können die elektromagnetischen Wellen Millimeterwellen, insbesondere im Frequenzbereich von 70 GHz bis 150 GHz, sein. Da die Wellenlängen bei diesen Frequenzen ca. 4 Millimeter und weniger betragen, können hiermit sehr kompakte Hohlwellenleiter zum Einsatz kommen, deren Querschnittsabmessungen typischerweise in der Größenordnung der zu führenden Wellenlängen zu wählen sind.

Mit der Erfindung wird ferner eine Verwendung der erfindungsgemäßen Vorrichtung zur Bestimmung des Abstands zwischen mindestens einer Laufschaufel und einer die mindestens eine Laufschaufel umgebenden Wandung einer Gasturbine.
- Der Hohlwellenleiter kann dabei vorteilhafterweise in einem Kühlkanal der Wandung angeordnet sein. Somit kann zur Installation der erfindungsgemäßen Vorrichtung eines von vielen bereits in der Wandung zur Kühlung vorgesehenen Kühlkanälen verwendet werden.

Bevorzugte, jedoch keinesfalls einschränkende Ausführungsbeispiele der Vorrichtung werden nunmehr anhand der Zeichnung näher erläutert. Zur Veranschaulichung ist die Zeichnung nicht maßstäblich ausgeführt und gewisse Merkmale sind schematisiert dargestellt. Im Einzelnen zeigen
- Figur 1: eine Gasturbine des Stands der Technik in einer teilweise aufgeschnittenen, perspektivischen Ansicht,
- Figur 2: eine Laufschaufel der Gasturbine aus Figur 1,
- Figur 3: eine schematische Darstellung der erfindungsgemäßen Vorrichtung mit drei Hohlwellenleitersegmenten, und
- Figur 4: eine schematische Darstellung der erfindungsgemäßen Vorrichtung mit zwei Hohlwellenleitersegmenten.

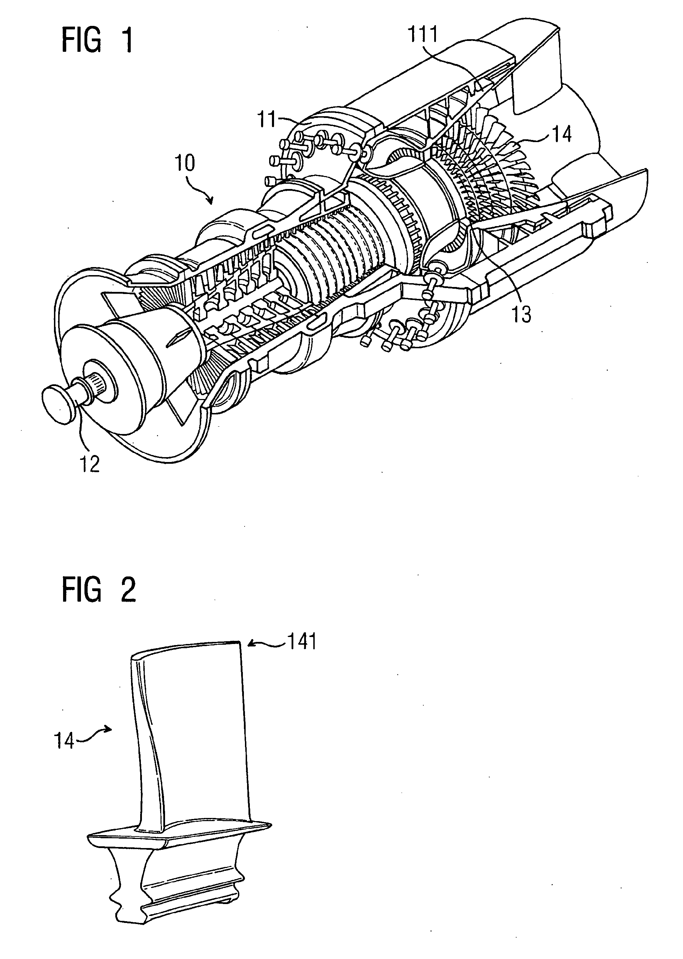

Einander entsprechende Teile sind in den Figuren 1 bis 4 mit denselben Bezugszeichen versehen.

In Figur 1 ist eine Gasturbine 10 des Standes der Technik dargestellt, die für eine hohe Gaseintrittstemperatur von ca. 1200°C konzipiert ist. In einem Gehäuse 11 mit innerer Wandung 111 weist die Gasturbine 10 eine drehbar gelagerte Rotorwelle 12 auf, an welcher Laufschaufeln 14 in einem Strömungskanal 13 angeordnet sind.

In Figur 2 ist eine solche Laufschaufel 14 im ausgebauten Zustand detaillierter dargestellt. Das obere Ende der Laufschaufel 14, die so genannte Laufschaufelspitze 141, ist im eingebauten Zustand der inneren Wandung 111 des Gasturbinengehäuses 11 zugewandt.

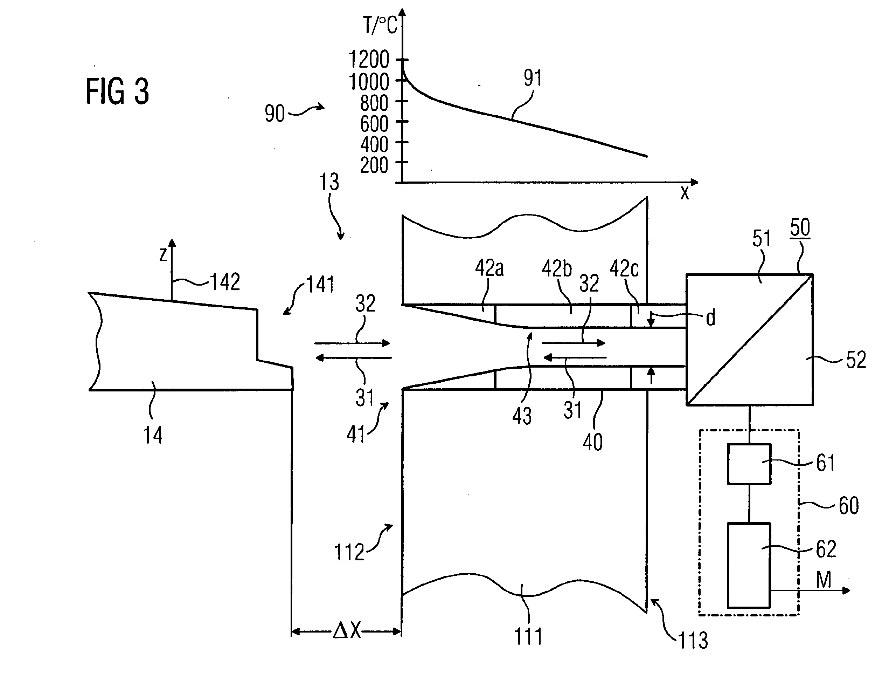

In Figur 3 ist eine schematische Darstellung der erfindungsgemäßen Vorrichtung in einem ersten Ausführungsbeispiel dargestellt. Der Einfachheit halber ist nur ein Teil einer Laufschaufel 14 schemenhaft gezeigt. Mit dem Pfeil 142 ist angedeutet, dass sich die Laufschaufel 14 während einer Abstandsmessung in Betrieb der Gasturbine 10 in Richtung des Pfeils 142 bewegt. Näherungsweise kann die Bewegung in Pfeilrichtung als lineare Bewegung in lateraler Richtung z betrachtet werden. Die Laufschaufelspitze 141 ist in einem radialem Abstand Δx von der inneren Wandung 111 des Gasturbinengehäuses 11 beabstandet. Um einen möglichst guten Wirkungsgrad der Gasturbine 10 zu gewährleisten, ist der Abstand Δx zwischen den Enden der Laufschaufeln 14, d.h. den Laufschaufelspitzen 141, und der inneren Wandung 111 des Gasturbinengehäuses 11 möglichst gering und liegt typischerweise in einem Bereich von wenigen Millimetern, insbesondere zwischen 1 mm und 20 mm. Die Wandung 111 weist mindestens eine Öffnung auf, in welche formschlüssig ein Hohlwellenleiter 40 zum Führenden von elektromagnetischen Wellen 31, 32 angeordnet ist. Vorteilhafterweise ist der Hohlwellenleiter 40 in einem von zahlreichen in der Wandung 111 bereits vorhandenen Kühlkanälen eingebracht. Der Holwellenleiter 40 ist rohrförmig ausgestaltet und weist beispielsweise einen runden oder rechteckigen Querschnitt mit einem Innendurchmesser d im Bereich von 2 bis 10 mm auf.

In Betrieb der Gasturbine 10 herrscht im Strömungskanal 13 eine Temperatur von ca. 1200°C. Die dem Strömungskanal 13 zugewandte Oberfläche 112 der Wandung 111 weist somit ebenfalls diese hohe Temperatur auf, die in Richtung der gegenüberliegenden Oberfläche 113 der Wandung 111 durch die Wandung 111 hindurch jedoch abnimmt. Das Temperaturprofil 91 ist im Diagramm 90 beispielhaft abgebildet. Auf de Ordinate ist die Temperatur T angegeben, während die Abszisse die Wegstrecke in x-Richtung durch die Wandung 111 angibt. Die Temperatur nimmt gemäß Diagramm 90 von 1200°C an der inneren Oberfläche 112 der Wandung 111 bis ca. 200°C an der äußeren Oberfläche 113 der Wandung 111 stetig ab, wobei in der Mitte zwischen beiden Oberflächen 112, 113 eine Temperatur von etwa 600°C vorherrscht.

Der Hohlwellenleiter 40 ist entlang seiner Längsachse, die hier in x-Richtung weist, aus mehreren, gemäß Figur 3 beispielsweise aus drei, Segmenten 42a, 42b, 42c ausgeführt. Deren Materialien sind dabei erfindungsgemäß abhängig vom Temperaturprofil 91 gewählt, um eine hohe Temperaturbeständigkeit bei gleichzeitiger optimaler Wellenleitereigenschaften über die gesamte Länge des Hohlwellenleiters 40 zu gewähren.

So ist das die Hohlwellenleiteröffnung 41 aufweisende Segment 42a im Bereich der inneren Oberfläche 112 der Wandung 111 aus einer Superlegierung ausgebildet. Als Material für dieses Segment 42a eignen sich hierfür besonders "Inconel" (eine Marke der Firma "Special Metals Corporation", USA) oder "PM 1000" (eine Marke der Firma "Plansee GmbH", Deutschland). Für das dem Strömungskanal 13 am nächsten kommende Segment 42a kommt es dabei hauptsächlich auf eine gute Temperaturbeständigkeit bei extremen Temperaturen im Bereich von 1200°C an. Die Dämpfungseigenschaften spiele in diesem Hohlwellenleiterbereich eine untergeordnete Rolle. Zusätzlich ist zur besseren Abstrahl- und Empfangscharakteristik des Hohlwellenleiters 40 das die Hohlwellenleiteröffnung 41 aufweisende Segment 42a als Horn ausgeführt.

Das im Bereich der äußeren Oberfläche 112 der Wandung 111 und mit einer Sende-/Empfangseinheit 50 verbundene Segment 42c des Hohlwellenleiters 40 ist einer relativ niedrigen Temperatur ausgesetzt. Somit spielt die Temperaturbeständigkeit in diesem Bereich des Hohlwellenleiters 40 eine untergeordnete Rolle. Hier ist vorrangig, eine gute Wellenleitfähigkeit des Hohlwellenleiters 40 und damit ein geringes Dämpfungsvermögen des Segments 42c für die im Hohlleiter 40 zu führenden elektromagnetische Wellen 31, 32 zu gewährleisten. Dies wird erfindungsgemäß dadurch erreicht, dass das mit der Sende-/Empfangseinheit 50 verbundene Segment 42c aus einem Gruppe-11-Element oder Platin ausgeführt ist. Alternativ kann dieses Segment 42c auch aus Edelstahl ausgebildet sein, wobei die innere Fläche 43 des Hohlwellenleiters 40, welche für die Führung der elektromagnetischen Wellen 31, 32 verantwortlich ist, mit einer Beschichtung aus einem Gruppe-11-Element oder Platin versehen ist. Das Segment 42c und damit der Hohlwellenleiter 40 lassen sich dabei soweit verlängern, dass die an dieses Segment 42c angeschlossene Sende-/Empfangseinheit 50 in sicherer Entfernung zur Wandung 111 der Gasturbine 10 angeordnet werden kann.

Das zwischen beiden vorgenannten Segmenten 42a und 42c angeordnete Zwischensegment 42b ist vorteilhafterweise aus Edelstahl ausgeführt. Das Segment 42b ist somit korrosionsbeständig und weist eine hinreichende Temperaturbeständigkeit im Temperaturbereich um 600°C auf. Die Temperaturbeständigkeit und das Dämpfungsvermögen liegen für Edelstahl zwischen Superlegierung und Gruppe-11-Element. Ist das die Hohlwellenleiteröffnung 41 aufweisende Segment 42a beispielsweise aus "PM 1000" gefertigt, so kann das Zwischensegment 42b alternativ auch aus "Inconel" ausgeführt sein.

Der Übergangsbereich zweier aufeinander folgender Segmente 42a, 42b oder 42b, 42c im die elektromagnetischen Wellen 31, 32 führenden Innenbereich des Hohlwellenleiters 40 kann mit einem Material, aus welchem eines der beiden Segmente 42a, 42b bzw. 42b, 42c ausgeführt ist, beschichtet sein. Mit einer derartigen Beschichtung des Übergangsbereichs der inneren Oberfläche 43 werden günstigerweise Reflexionen der elektromagnetischen Wellen 31, 32 an den Grenzflächen des Übergangsbereiches zwischen zwei Segmenten 42a, 42b oder 42b, 42c vermieden, so dass die Führungseigenschaft des Hohlwellenleiters 40 insgesamt verbessert wird.

Im Einzelnen läuft eine Abstandsbestimmung folgendermaßen ab:
Die Sende-/Empfangseinheit 50, welche Mittel zum Einspeisen 51 und Empfangen 52 von elektromagnetischen Wellen 31, 32, insbesondere Mikrowellen im Frequenzbereich von 70 GHz bis 150 GHz, umfasst, speist mit dem Einspeisemittel 51, welches mit dem Hohlwellenleiter 40 verbunden ist, elektromagnetische Wellen 31 mit beispielsweise einer Frequenzen a in den Hohlwellenleiter 40 ein. Die elektromagnetische Wellen 31 werden dann durch die Hohlwellenleiteröffnung 41 hindurch in Richtung der Laufschaufel 14 ausgesendet. Nach Zurücklegen des Abstandes Δx wird wenigstens ein Anteil 32 der ausgesandten elektromagnetischen Wellen 31 von den Laufschaufelspitzen 141 zum Hohlwellenleiter 40 reflektiert und daraufhin vom Hohlleiter 40 der Sende-/Empfangseinheit 50 zugeführt. Mittels beispielsweise einer Empfangsdiode als Mittel 52 zum Empfangen von elektromagnetischen Wellen wird der reflektierte Anteil 32 der ausgesandten elektromagnetischen Wellen 31 detektiert und in entsprechende elektrische Signale gewandelt, die einer Auswerteeinheit 60 zugeführt werden. Mittels der Auswerteeinheit 60 werden aus den elektrischen Signalen zunächst der Phasenwert ϕᵣa der der Frequenzen a zugeordneten elektromagnetischen Wellen 32 bestimmt. Als nächstes werden mit einem Phasenvergleichsmittel 61 die Phase ϕ₀a der ausgesandten elektromagnetischen Wellen 31 mit der Phase ϕᵣa der reflektierten Anteile 32 der ausgesandten elektromagnetischen Wellen 31 verglichen. Der Phasenvergleichswert Δϕa, der beispielsweise durch einen Phasendifferenzwert Δϕa = ϕᵣa - ϕ₀a bestimmt wird, ist dabei direkt abhängig von der zurückgelegten Strecke der vom Sendemittel 51 eingespeisten elektromagnetischen Wellen 31. Dieser derart gewonnene Vergleichswert Δϕa wird dann mit einem Zuordnungsmittel 62 einem Messwert M für den Abstands Δx zwischen Laufschaufelspitze 141 und Wandung 111 zugeordnet. Die Zuordnung kann beispielsweise mit Hilfe einer Wertetabelle oder auch einem geeigneten Algorithmus erfolgen.

Der ermittelte Messwert M für den Abstand Δx der mindestens einen Laufschaufel 14 wird über nicht näher dargestellte Anzeige- bzw. Meldeeinheiten an eine überwachende Stelle gemeldet bzw. an eine Zentrale weitergeleitet.

Die Auswerteeinheit 60 kann auch mit einer Vergleichsfunktion ausgestattet sein, mit der das Unterschreiten eines vorgebbaren Abstandsschwellwertes feststellbar ist. So kann beispielsweise bei Unterschreiten des Schwellwertes eine Meldung automatisch ausgegeben werden, um eine geeignete Schutzmaßnahme, wie beispielsweise das Abschalten der Gasturbine 10 einzuleiten.

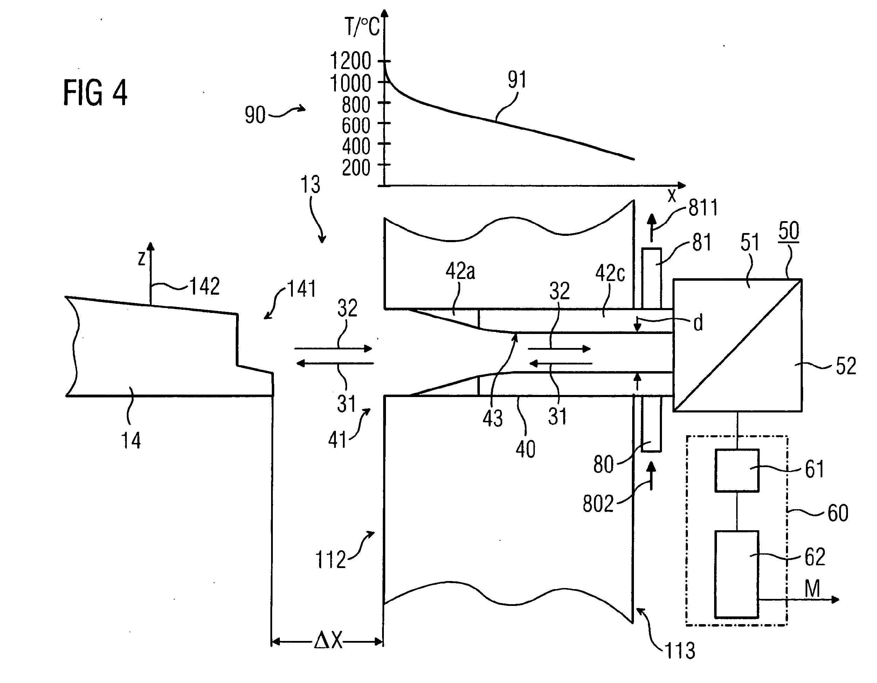

In Figur 4 ist ein weiteres Ausführungsbeispiel für die erfindungsgemäße Vorrichtung schematisch dargestellt. Sie entspricht weitgehend dem Ausführungsbeispiel gemäß Figur 3. Im Folgenden soll nur auf die Unterschiede eingegangen werden:
Der Hohlwellenleiter 40 weißt gemäß Figur 4 nur zwei Segmente 42a, 42c auf. Auf das in Figur 3 angegebene Zwischensegment 42b wird verzichtet. Das die Hohlwellenleiteröffnung 41 aufweisende Segment 42a schließt hierbei nicht bündig mit der inneren Oberfläche 112 der Wandung 111 ab, sondern ist in x-Richtung zurückgesetzt, um nicht direkt den Temperaturen im Strömungskanal 13 ausgesetzt zu sein. Als Material für das Segment 42a eignet sich auch hier eine Superlegierung, insbesondere "Inconel", besonders gut. Das mit der Sende-/Empfangseinheit 50 verbundene Segment 42c ist, wie vorstehend beschrieben, aus einem Gruppe-11-Element oder Platin oder alternativ aus Edelstahl ausgebildet, wobei die Innenfläche 43 des Hohlwellenleiters 40 mit einer Beschichtung aus einem Gruppe-11-Element oder Platin versehen ist. Da das mit der Sende-/Empfangseinheit 50 verbundene Segment 42c bis in die Mitte zwischen beide Oberflächen 112, 113 der Wandung 111 hineinreicht, ist zumindest dieses Segment 42c mit einer Kühlvorrichtung versehen. Hierzu weist das Segment 42c Kanäle (in Figur 4 nicht dargestellt) zum Führen eines flüssigen oder gasförmigen Kühlmittels, wie beispielsweise Wasser bzw. Luft. Das Kühlmittel kann über am Segment 42c angeordnete Einlassstutzen 80 und Auslassstutzen 81 durch die Kühlkanäle geführt werden. Die Pfeile 802, 811 deuten dabei das Einlassen und den Auslassen des Kühlmittels an. Damit ist gewährleistet, dass das mit der Sende-/Empfangseinheit 50 verbundene Segment 42c im Mittenbereich der Wandung 111 vor temperaturbedingter Beschädigung geschützt ist.

Die vorliegende Erfindung ist nicht auf die dargestellten Ausführungsbeispiele beschränkt anzusehen. Ebenso in den Schutzbereich hineingehörend ist, dass auch mehrere Hohlwellenleiter 40 zum Aussenden und/oder für den Empfang vorgesehen sind, um beispielsweise eine Redundanz der Messung oder auch eine höhere Genauigkeit zu erreichen.

## Patentansprüche

1. Vorrichtung zur Bestimmung des Abstands (Δx) zwischen mindestens einer Laufschaufel (14) und einer die mindestens eine Laufschaufel (14) umgebenden Wandung (111) einer Gasturbine (10), welche Vorrichtung folgende Teile umfasst, nämlich
- einen Hohlwellenleiter (40) zum Führen elektromagnetischer Wellen (31, 32) und Aussenden von elektromagnetischen Wellen (31) durch mindestens eine der Laufschaufel (14) zugewandte Hohlwellenleiteröffnung (41) in Richtung der Laufschaufel (14),
- mindestens ein mit dem Hohlwellenleiter (40) verbundenes Mittel (51) zum Einspeisen der elektromagnetischen Wellen (31) in den Hohlwellenleiter (40),
- mindestens ein mit dem Hohlwellenleiter (40) verbundenes Mittel (52) zum Empfangen reflektierter Anteile (32) der in den Hohlleiter (40) einzuspeisenden elektromagnetischen Wellen (31),
und
- eine Auswerteeinheit (60) zur Auswertung der zu empfangenen reflektierten Anteile (32) der einzuspeisenden elektromagnetischen Wellen (31), umfassend Mittel (61) zum Vergleich der Phase der einzuspeisenden elektromagnetischen Wellen (31) mit der Phase der reflektierten Anteile (32) der einzuspeisenden elektromagnetischen Wellen (31), wobei mittels der Auswerteeinheit für jede Frequenz ein Phasenvergleichswert ermittelbar ist und aus einem Vergleich der Phasenvergleichswerte der Abstands (Δx) bestimmbar ist, **dadurch gekennzeichnet, dass**
- der Hohlwellenleiter (40) aus zumindest zwei Hohlwellenleitersegmenten ausgeführt ist, welche aus unterschiedlichen Materialien ausgestaltet sind, wobei die Temperaturbeständigkeit und das Dämpfungsvermögen für die elektromagnetischen Wellen der Materialien ausgehend von dem Segment, welches mit den Mitteln (51, 52) zum Einspeisen und Empfangen verbunden ist, in Richtung des die Hohlwellenleiteröffnung (41) aufweisenden Segments zunehmen.

2. Vorrichtung nach Anspruch 1, **dadurch gekennzeichnet, dass** der Hohlwellenleiter (40) aus drei Segmenten ausgeführt ist.

3. Vorrichtung nach Anspruch 1 oder 2, **dadurch gekennzeichnet, dass** das Segment, welches mit den Mitteln (51, 52) zum Einspeisen und Empfangen verbunden ist, aus einem Metall mit einem geringen Dämpfungsvermögen, insbesondere aus Kupfer, Silber, Gold oder Platin, und das die Hohlwellenleiteröffnung (41) aufweisende Segment aus einer Superlegierung mit hoher Temperaturbeständigkeit ausgeführt sind.

4. Vorrichtung nach Anspruch 2 oder 3, **dadurch gekennzeichnet, dass** ein mittleres Segment aus einem Edelstahl ausgeführt ist.

5. Vorrichtung nach einem der vorangehenden Ansprüche, **dadurch gekennzeichnet, dass** das Segment, welches mit den Mitteln (51, 52) zum Einspeisen und Empfangen verbunden ist, mit einer Flüssigkeit oder Luft kühlbar ausgeführt ist.

6. Vorrichtung nach einem der vorangehenden Ansprüche, **dadurch gekennzeichnet, dass** der Hohlwellenleiter im Übergangsbereich zweier aufeinander folgender Segmente mit einer Beschichtung aus einem der beiden Segmentmaterialien versehen ist.

7. Vorrichtung nach einem der vorangehenden Ansprüche, **dadurch gekennzeichnet, dass** das die Hohlwellenleiteröffnung (41) aufweisende Segment als Horn ausgestaltet ist.

8. Vorrichtung nach einem der vorangehenden Ansprüche, **dadurch gekennzeichnet, dass** die elektromagnetischen Wellen (31a, 31b, 32a, 32b) Millimeterwellen, insbesondere im Frequenzbereich von 70 GHz bis 150 GHz, sind.

9. Verwendung der Vorrichtung nach einem der vorangehenden Ansprüche zur Bestimmung des Abstands (Δx) zwischen mindestens einer Laufschaufel (14) und einer die mindestens eine Laufschaufel (14) umgebenden Wandung (111) einer Gasturbine (10).

10. Verwendung nach Anspruch 8, **dadurch gekennzeichnet, dass** der Hohlwellenleiter (40) in einem Kühlkanal der Wandung (111) angeordnet ist.

## Claims

1. Device for determining the distance (Δx) between at least one rotor blade (14) and a wall (111) of a gas turbine surrounding the at least one rotor blade (14), which device comprises the following parts, namely:
- a waveguide (40) for guiding electromagnetic waves (31, 32) and emitting electromagnetic waves (31) in the direction of the rotor blade (14) through at least one waveguide opening (41) which faces the rotor blade (14),
- at least one means (51) connected to the waveguide (40) and provided for injecting the electromagnetic waves (31) into the waveguide (40),
- at least one means (52) connected to the waveguide (40) and provided for receiving reflected portions (32) of the electromagnetic waves (31) to be injected into the waveguide (40),
and
- an evaluation unit (60) for evaluating the reflected portions (32) to be received of the electromagnetic waves (31) to be injected, comprising means (61) for comparing the phases of the electromagnetic waves (31) to be injected with the phases of the reflected portions (32) of the electromagnetic waves (31) to be injected, wherein a phase comparison value can be ascertained for each frequency by means of the evaluation unit and the distance (Δx) can be determined from a comparison of the phase comparison values, **characterised in that**
- the waveguide (40) is configured from at least two waveguide segments which are made from different materials, wherein the temperature stability and the electromagnetic wave damping capacity of the materials increase, starting from the segment which is connected to the means (51, 52) for injecting and receiving, in the direction of the segment having the waveguide opening (41).

2. Device according to claim 1, **characterised in that** the waveguide (40) is configured from three segments.

3. Device according to claim 1 or 2, **characterised in that** the segment which is connected to the means (51, 52) for injecting and receiving is made from a metal having a low damping capacity, in particular from copper, silver, gold or platinum, and the segment having the waveguide opening (41) is made from a superalloy having a high temperature stability.

4. Device according to claim 2 or 3, **characterised in that** a central segment is made from a special steel.

5. Device according to one of the preceding claims, **characterised in that** the segment which is connected to the means (51, 52) for injecting and receiving is configured such that it can be cooled by a liquid or air.

6. Device according to one of the preceding claims, **characterised in that** in the transition zone of two consecutive segments the waveguide is provided with a coating of one of the two segment materials.

7. Device according to one of the preceding claims, **characterised in that** the segment having the waveguide opening (41) is embodied as a horn.

8. Device according to one of the preceding claims, **characterised in that** the electromagnetic waves (31a, 31b, 32a, 32b) are millimetre waves, in particular in the frequency range from 70 GHz to 150 GHz.

9. Use of the device according to one of the preceding claims for determining the distance (Δx) between at least one rotor blade (14) and a wall (111), surrounding the at least one rotor blade (14), of a gas turbine (10).

10. Use according to claim 8, **characterised in that** the waveguide (40) is arranged in a cooling channel of the wall (111).

## Revendications

1. Dispositif de détermination de la distance (Δx) entre au moins une aube (14) mobile et une paroi (11) d'une turbine (10) à gaz entourant la au moins une aube (14) mobile, dispositif qui comprend les parties suivantes, à savoir
- un guide (40) d'ondes tubulaire pour le guidage d'ondes (31, 32) électromagnétiques et pour l'émission en direction de l'aube (14) mobile d'ondes (31) électromagnétiques par au moins une ouverture (41) du guide d'ondes tubulaire tournée vers l'aube (14) mobile,
- au moins un moyen (51) relié au guide (40) d'ondes tubulaire pour injecter des ondes (31) électromagnétiques dans le guide (40) d'ondes tubulaire,
- au moins un moyen (52) relié au guide (40) d'ondes tubulaire pour la réception de parties (32) réfléchies des ondes (31) électromagnétiques à injecter dans le guide (40) d'ondes tubulaire,
et
- une unité (60) d'exploitation pour l'exploitation des parties (32), réfléchies et à recevoir, des ondes (31) électromagnétiques injectées, comprenant des moyens (61) de comparaison de la phase des ondes (31) électromagnétiques injectées à la phase des parties (32) réfléchies des ondes (31) électromagnétiques à injecter, dans lequel, au moyen de l'unité d'exploitation, on peut, pour chaque fréquence déterminer une valeur de comparaison de phases et on peut, à partir d'une comparaison des valeurs de comparaison de phases, déterminer la distance (Δx),
**caractérisé en ce que**
- le guide (40) d'ondes tubulaire est réalisé en au moins deux segments de guide d'ondes tubulaire, qui sont en des matériaux différents, la résistance à la température et le pouvoir d'amortissement des ondes électromagnétiques des matériaux augmentant du segment qui est relié aux moyens (51 , 52) d'injection et de réception, en direction du segment ayant l'ouverture 41) du guide d'ondes tubulaire.

2. Dispositif suivant la revendication 1, **caractérisé en ce que** le guide (40) d'ondes tubulaire est réalisé en trois segments.

3. Dispositif suivant les revendications 1 ou 2, **caractérisé en ce que** le segment, qui est relié aux moyens (51 , 52) d'injection et de réception, est en un métal ayant un petit pouvoir d'amortissement notamment en cuivre, en argent, en or ou en platine, et le segment ayant l'ouverture (41) du guide d'ondes tubulaire est en un superalliage ayant une grande résistance à la température.

4. Dispositif suivant les revendications 2 ou 3, **caractérisé en ce qu'**un segment médian est en un acier fin.

5. Dispositif suivant l'une des revendications précédentes, **caractérisé en ce que** le segment, qui est relié aux moyens (51, 52) d'injection et de réception, est réalisé de manière à pouvoir être refroidi par un liquide ou par de l'air.

6. Dispositif suivant l'une des revendications précédentes, **caractérisé en ce que** le guide d'ondes tubulaire est, dans la zone de transition de deux segments qui se succèdent l'un après l'autre, pourvu d'un revêtement en l'un des deux matériaux des segments.

7. Dispositif suivant l'une des revendications précédentes, **caractérisé en ce que** le segment ayant l'ouverture (41) du guide d'ondes tubulaire est conformé en cornet.

8. Dispositif suivant l'une des revendications précédentes, **caractérisé en ce que** les ondes (31a, 31b, 32a , 32b) électromagnétiques sont des ondes millimétriques, notamment dans la plage de fréquence de 70 GHz à 150 GHz.

9. Utilisation du dispositif suivant l'une des revendications précédentes, pour la détermination de la distance (Δx) entre au moins une aube (14) mobile et une paroi (111) d'une turbine (10) à gaz entourant la au moins une aube (14) mobile.

10. Utilisation suivant la revendication 8, **caractérisé en ce que** le guide (40) d'ondes tubulaire est disposé dans un canal de refroidissement de la paroi (111).
